# EUROPÄISCHE PATENTSCHRIFT

(11) **EP 1 342 742 B1**
(45) Veröffentlichungstag und Bekanntmachung des Hinweises auf die Patenterteilung: **02.08.2006**
(21) Anmeldenummer: 02004869.0
(22) Anmeldetag: 04.03.2002
(51) Int. Cl.: C08G 77/04, C08L 83/04

(54) **Bei Raumtemperatur aushärtbare Polysiloxan-Masse**
Room temperature curable polysiloxane compositions
Agent d'étanchéité a base de silicone a durcissement a temperature ambiante

(43) Veröffentlichungstag der Anmeldung: 10.09.2003
(73) Patentinhaber: hanse chemie AG, 21502 Geesthacht (DE)
(72) Erfinder: Stenert, Michael, Dr., 21039 Hamburg (DE); Block, Hermann, 21379 Echem (DE)
(74) Vertreter: Glawe, Delfs, Moll

(56) Entgegenhaltungen:
- US-A- 5 508 360
- US-A- 5 656 710
- US-A- 6 013 754
- PATENT ABSTRACTS OF JAPAN vol. 010, no. 071 (C-334), 20. März 1986 (1986-03-20) & JP 60 210663 A (SEITETSU KAGAKU KOGYO KK), 23. Oktober 1985 (1985-10-23)

## Beschreibung

Die Erfindung betrifft eine bei Raumtemperatur aushärtbare Polysiloxan-Masse.

Bei Raumtemperatur aushärtende Polysiloxan- oder Silikonmassen (RTV (room temperature vulcanising) compounds) werden als sogenannte Silikon-Dichtmassen für viele Zwecke verwendet. Gebräuchlich sind insbesondere Einkomponentenmassen (RTV-1), die bei Zutritt von Luftfeuchtigkeit aushärten. Sie enthalten in der Regel hydroxyfunktionelle Polydiorganosiloxane und Silanvernetzer, in der Regel sogenannte Oximsilane. Bei Zutritt von Luftfeuchtigkeit kondensieren Hydroxypolysiloxan und der Silanvernetzer unter Abgabe eines Alkanonoxims, in der Regel Butanonoxim. Diese sogenannten Oxim-Dichtstoffe werden in der Praxis bevorzugt, da die Eigenschaften ohne großen Entwicklungsaufwand über einen großen Bereich variiert und an anwendungstechnische Erfordernisse angepaßt werden können. Sie besitzen sehr gute Lagerfähigkeiten.

Beim Aushärten durch Kondensation wird als Spaltprodukt Butanonoxim frei. Auch bei bzw. unmittelbar nach dem Herstellvorgang der Masse wird bereits in gewissen Umfang Butanonoxim frei, da das als Vernetzer zugesetzte Butanonoximsilan teilweise mit in den Rezepturbestandteilen vorhandenem Wasser abreagiert und dabei Butanonoxim abgespalten wird. Die in der Kartusche befindliche noch nicht ausgehärtete Dichtmasse enthält daher stets einen gewissen Anteil Butanonoxim.

Butanonoxim steht im Verdacht, karzinogen zu sein. Ab dem 1. Juli 2002 werden alle Verpackungen kennzeichnungspflichtig sein, die mehr als 1 % Butanonoxim enthalten. Dieser Anteil wird bei den üblichen RTV-1 auf Oximbasis durch die bei der Herstellung ablaufenden und oben beschriebenen Nebenreaktionen in der Regel erreicht oder überschritten.

Ebenfalls bekannt sind sogenannte Alkoxy-Dichtstoffe. Man läßt hier beim Aushärten hydroxyfunktionelle Polysiloxane mit Alkoxysilanen als Vernetzer reagieren. Die Formulierung solcher RTV-1 auf Alkoxybasis ist problematisch, da die Lagerstabilität verringert ist und in jedem Fall ein geeigneter Katalysator vorhanden sein muß, um das Aushärten zu ermöglichen.

Der vorliegenden Erfindung liegt die Aufgabe zugrunde, eine Polysiloxan-Masse der eingangs genannten Art zu schaffen, die die genannten Nachteile der Oxim-Dichtmassen nicht aufweist und einfach formulierbar ist.

Die erfindungsgemäßen bei Raumtemperatur aushärtbaren Polysiloxan-Massen enthalten folgende Bestandteile:
a) vernetzungsfähige Polysiloxane, die Acyloxygruppen als funktionelle Gruppen enthalten;
b) Alkoxysilanvernetzer.

Zunächst seien einige im Rahmen der Erfindung verwendete Begriffe erläutert.

Der Begriff "bei Raumtemperatur aushärtbare Polysiloxan-Masse" oder RTV ist dem Fachmann geläufig und bspw. erläutert in Ullmanns Encyclopedia of Industrial Chemistry", 5. Auflage, Band A 24, S. 72.

Die in der erfindungsgemäß vorhandenen Masse vorhandenen Polysiloxane müssen vernetzungsfähig sein. Dies bedeutet, daß sie wenigstens zwei funktionelle Gruppen enthalten, die mit dem ebenfalls vorhandenem Vernetzer reagieren können. Erfindungsgemäß ist vorgesehen, daß die Polysiloxane zumindest teilweise (nicht notwendigerweise ausschließlich) Acyloxygruppen als funktionelle vernetzungsfähige Gruppen enthalten. Bei dem Vernetzungsvorgang (Kondensation) wird die Acylgruppe als Säure abgespalten.

Der Begriff Alkoxysilanvernetzer bezeichnet Silane, die als zum Eingehen einer Vernetzungsreaktion fähige funktionelle Gruppen Alkoxygruppen enthalten (siehe bspw. Tabelle 8 auf der zitierten Seite von Ullmanns Encyclopedia).

Der Kern der Erfindung liegt darin, bei den vernetzungsfähigen Polysiloxanen als funktionelle Gruppen Acyloxygruppen statt der im Stand der Technik üblichen Hydroxygruppen vorzusehen. Auf diese Art und Weise ist es möglich, die im Stand der Technik für sich genommen schon bekannten Alkoxysilane als Silan-Vernetzer zu verwenden und trotzdem eine hinreichende Reaktivität und damit schnelle Aushärtung der Polysiloxan-Masse unter Einfluß von Luftfeuchtigkeit zu erreichen, ohne daß besondere Anforderungen an den Vernetzungskatalysator zu stellen wären. Die Acyloxypolysiloxane weisen mit den Alkoxysilanen eine erheblich höhere Reaktivität auf als die im Stand der Technik verwendeten hydroxyfunktionellen Polysiloxane.

Im Stand der Technik sind bereits sogenannte Acetoxy-Dichtstoffe bekannt, bei denen Hydroxypolysiloxane mit Acetoxysilan zur Aushärtung reagieren. Diese Acetoxy-Dichtstoffe werden im Stand der Technik nur wenig verwendet, da sie unter Freisetzung korrosiver Essigsäure aushärten.

Die Erfindung benutzt im Unterschied zu diesem Stand der Technik die Acetoxygruppen als reaktive funktionelle Gruppen am Polysiloxan statt am Silan und läßt diese Acetoxygruppen des Polysiloxans während des Aushärtens der RTV-Masse mit den weniger reaktiven Alkoxygruppen des Silanvernetzers kondensieren.

Erfindungsgemäß kann es vorgesehen sein, daß das Aushärten weitgehend durch Kondensation von Acyloxygruppen des Polysiloxans mit Alkoxygruppen des Polysiloxanvernetzers erfolgt. Jedoch ist es im Rahmen der Erfindung möglich und häufig bevorzugt, als funktionelle Gruppen an den Polysiloxanen neben Acyloxygruppen andere funktionelle Gruppen wie bspw. Hydroxygruppen zu verwenden. Die Silanvernetzer können in diesem Fall neben den Alkoxygruppen als funktionelle Gruppen weitere Gruppen wie die aus dem Stand der Technik bekannten Butanonoximgruppen enthalten. Die Silanvernetzer können Alkoxygruppen und weitere funktionelle Gruppen entweder im selben Molekül kombinieren oder es können Mischungen von Silanvernetzern mit verschiedenen funktionellen Gruppen in der Masse enthalten sein. Bei dieser Ausführungsform der Erfindung ist vorzugsweise der Anteil von Oximgruppen im zugesetzten Silanvernetzer so gering, daß in der in der Kartusche gelagerten Masse der eine Kennzeichnungspflicht auslösende Grenzwert des Butanonoxim-Anteils (1 %) nicht überschritten wird. Ein besonderer Vorteil der Kombination der vorliegenden Erfindung mit der Oximvernetzung des Standes der Technik liegt jedoch darin, daß dann bei der Aushärtreaktion sowohl geringe Mengen Säure (in der Regel Essigsäure) als auch Butanonoxim freigesetzt werden und daß diese beiden Spaltprodukte sich gegenseitig in Form eines Adduktes binden. So gebundenes Butanonoxim ist kein freies Butanonoxim, es wird daher nicht in den eine Kennzeichnungspflicht auslösenden Anteil Butanonoxim eingerechnet. Durch die Bindung der frei gewordenen Säure wird zudem ein Essiggeruch der ausgehärteten Masse oder eine Korrosivität derselben vermieden.

Die erfindungsgemäß vorgesehenen Acyloxygruppen weisen vorzugsweise einen Kohlenwasserstoffrest (insbesondere Alkanrest) mit 1 bis 8 C-Atomen auf, der geradkettig oder verzweigt sein kann. Besonders bevorzugt als Acyloxygruppen sind Acetoxygruppen.

Bevorzugt ist es, wenn die vernetzungsfähigen Polysiloxane wenigstens teilweise Polydiacyloxysiloxane sind. Dementsprechend enthalten die Alkoxysilanvernetzer zumindest teilweise vorzugsweise zwei oder mehr Alkoxygruppen in einem Molekül.

Wie bereits erwähnt, ist es ebenfalls möglich, in einem Silanvernetzer bspw. zwei funktionelle Gruppen (Alkoxygruppen und Oximgruppen) zu kombinieren, gleiches gilt für die Kombination von Acyloxygruppen und Hydroxygruppen als funktionelle Gruppen im Polysiloxan. Als Silanvernetzer können gleichfalls Teilkondensate von Alkoxygruppen und ggf. weitere funktionelle Gruppen enthaltenden Silanen verwendet werden. Alkoxysilanvernetzer im Sinne der Erfindung sind demnach zur Vernetzung fähige Silane, die unter den funktionellen Gruppen wenigstens eine Alkoxygruppe enthalten.

Gegenstand der Erfindung ist ferner ein Verfahren zur Herstellung einer erfindungsgemäßen Polysiloxan-Masse, bei dem man reaktive Hydroxygruppen enthaltende Polysiloxane mit Silanen reagieren läßt, die Acyloxygruppen enthalten. Anschließend oder gleichzeitig wird der erfindungsgemäße Alkoxysilanvernetzer zugesetzt. Bevorzugt enthalten die Acyloxysilane wenigstens zwei Acyloxygruppen.

Bei dem genannten ersten Reaktionsschritt entstehen aus den hydroxyfunktionellen Polysiloxanen die erfindungsgemäß vorgesehenen acyloxyfunktionellen Polysiloxane. In diesem ersten Schritt entstehen vernetzungsfähige Polysiloxane, die Acyloxygruppen als funktionelle Gruppen enthalten.

Bei den im ersten Schritt der Reaktion eingesetzten reaktive Hydroxygruppen enthaltenden Polysiloxanen handelt es sich vorzugsweise um Polydiorganosiloxane, weiter vorzugsweise um Polydimethylsiloxane. Insbesondere können α, ω-funktionelle Polydiorganosiloxane eingesetzt werden.

Die in der ersten Stufe eingesetzten acyloxyfunktionellen Silane sind vorzugsweise ausgewählt aus der Gruppe bestehend aus:
a) Silanen der allgemeinen Formel:

   Rₙ(R-O)ₘSi(O-AC)ₖ

   wobei Ac einen Acylrest und R Wasserstoff oder einen ggf. substituierten Kohlenwasserstoffrest mit 1-8 C-Atomen darstellt, wobei R gleich oder verschieden sein können und wobei für die Subskripte gilt:
   k: 1 bis 4
   m: 0 bis 2
   n: 0 bis 2
   k+m+n=4
b) Mischungen aus Silanen gemäß a) mit Silanen, die wie in a) definiert sind, bei denen jedoch für die Subskripte gilt:
   k: 0 bis 4
   m: 0 bis 4
   n: 0 bis 4
   k+m+n=4
c) teilhydrolysierte Kondensate von Silanen gemäß a) oder Mischungen gemäß b).

Der Anteil der Acyloxygruppen enthaltenden Silane bezogen auf die reaktive Hydroxygruppen enthaltenden Polysiloxane in dem ersten Verfahrensschritt beträgt vorzugsweise 0,01 - 2 Gew.-%, weiter vorzugsweise 0,05 - 1,5 Gew.-%, weiter vorzugsweise 0,1 - 0,5 Gew.-%. Für die Silane gemäß a) gilt bevorzugt k: 2 bis 4; m: 0 bis 2; n: 0 bis 2; k+m+n=4.

In der erfindungsgemäß hergestellten Polysiloxan-Masse liegt der Gesamtanteil an Silanvernetzern (Alkoxysilanvernetzer und fakultativ andere Silanvernetzer bspw. mit Oximgruppen) bezogen auf die vernetzungsfähigen Polysiloxane bevorzugt bei etwa 3 - 8 Gew.-%.

Sofern gemäß einer bevorzugten Ausführungsform der Erfindung sowohl Alkoxy- als auch Oxim-Silane (als physikalische Mischung oder mit Alkoxy- oder Oximgruppen im selben Molekül) als Silanvernetzer verwendet werden, liegt das Molverhältnis von Alkoxy- und Oximgruppen in diesem Vernetzer bevorzugt zwischen 1:4 und 4:1, weiter bevorzugt zwischen 1:2 und 2:1.

Bei den bevorzugt als vernetzungsfähige Polysiloxane eingesetzten Polydimethylsiloxanen können die Methylgruppen durch Vinyl-, Phenyl-, C₂ bis C₈-Alkyl- oder Halogenalkylgruppen ersetzt sein. Die Polysiloxane sind vorzugsweise im wesentlichen linear, es können jedoch auch verzweigt wirkende Organosilyl-Einheiten vorhanden sein. Bevorzugte Viskositäten der Polysiloxane liegen zwischen 0,1 und 1000 Pa.s, weiter bevorzugt 1 und 100 Pa·s, weiter bevorzugt 5 und 1000 Pa·s, besonders bevorzugt 20 bis 400 Pa·s.

Als Weichmacher können endgestoppte Polydiorganosiloxane und/oder flüssige aliphatische oder aromatische Kohlenwasserstoffe bevorzugt im Molekulargewichtsbereich von etwa 100 bis 1000 verwendet werden, deren Flüchtigkeit gering und deren Verträglichkeit mit Polysiloxanen hinreichend ist. Beispielhaft genannt seien Paraffinöle, polysubstiuierte Alkylbenzole oder oligomere, vorzugsweise verzweigte C3 bis C5-Alkene. Die Viskosität der Weichmacher liegt bevorzugt im Bereich 0,1 - 1 Pa·s.

Erfindungsgemäß verwendbare Silanvernetzer sind bspw.: Tetraethoxysilan, Methyltrimethoxysilan, Methyltriethoxysilan, Vinyltriethoxysilan, Ethyltrimethoxysilan, Vinyltrimethoxysilan, Tetrabutanonoximsilan, Methyltributanonoximsilan, Ethyltributanonoximsilan, Vinyltributanonoximsilan, Ethyltripropanonoximsilan, Vinyltripentanon(2)oximsilan, Dimethoxydibutanonoximsilan, Ethoxytributanonoximsilan, Trimethoxybutanonoximsilan, t-Butoxytributanonoximsilan, Dimethoxydibutanonoximsilan, Methylmethoxydibutanonoximsilan, Vinylmethoxydibutanonoximsilan, Ethylmethoxydibutanonoximsilan, Vinyldimethoxybutanonoximsilan, Methyldiethoxybutanonoximsilan, Methyldimethoxypropanonoximsilan, Methyldimethoxypentanon(2)oximsilan, Tetramethoxysilan, Tetra-n-propoxysilan, Tetraisopropoxysilan, Octyltrimethoxysilan, Octyltriethoxysilan, Methyltriisopropenoxysilan, Vinyltriisopropenoxysilan, Phenyltriisopropenoxysilan und Tetraisopropenoxysilan.

Bevorzugt verwendete Silane sind: Methyltrimethoxysilan, Methyltriethoxysilan, Tetrabutanonoximsilan, Methyltributanonoximsilan, Vinyltributanonoximsilan, Vinyldimethoxybutanonoximsilan, Methyldiethoxybutanonoximsilan und Dimethoxydibutanonoximsilan.

In den erfindungsgemäßen Polysiloxan-Massen können weitere Hilfs- und Füllstoffe enthalten sein. Übliche Hilfsstoffe sind bspw. organische Lösungsmittel, wie z. B. Toluol, Hexan, Isoparaffine; ferner Farbpigmente oder organische Säuren, wie z. B. 2-Ethylhexansäure, Benzoesäure und Dodecylbenzolsulfonsäure.

Füllstoffe sind vorzugsweise verstärkende und nicht verstärkende Füllstoffe, wie z. B. pyrogene oder gefällte Kieselsäure, Ruß, Quarzmehl, gefällte oder gemahlene Kreide, sowie Metalloxide, -sulfate, -silikate, -hydroxyde, -carbonate und/oder -hydrogencarbonate. Die Füllstoffe können ggf. oberflächenmodifiziert sein. Es können Gemische von Füllstoffen beliebiger Zusammensetzung eingesetzt werden.

Ein bevorzugter Füllstoff ist als Thixotropierungsmittel verwendete pyrogene Kieselsäure. Es kann unbehandelte, hydrophile als auch mit verschiedenen Silanen behandelte, hydrophobe Kieselsäure verwendet werden. Bevorzugt wird hydrophile Kieselsäure mit einer BET-Oberfläche von 100 bis 300 m²/g verwendet.

Weitere fakultative Bestandteile sind bspw. Haftmittel wie Aminosilane, Methacrylsilane, Epoxysilane oder Mercaptosilane.

Als Katalysatoren für die Polymerisationsreaktion können üblicherweise für kondensationsvernetzende Polysiloxane eingesetzte metallorganische Verbindungen verwendet werden, bspw. Dibutylzinndilaurat, Dibutylzinndiacetat, Zinn-II-Octoat und dergleichen. Katalysatoren auf Basis von Titan, Zirkonium oder Aluminiumverbindungen sind gleichfalls verwendbar.

Beispiele für den ersten Reaktionsschritt des erfindungsgemä-βen Verfahrens einsetzbare Acyloxysilane sind Tetraacetoxysilan, Methyltriacetoxysilan, Ethyltriacetoxysilan, Dimethyldiacetoxysilan, Methylethoxydiacetoxysilan, Dimethoxydiacetoxysilan, Phenylmethoxydiacetoxysilan, Dibutoxydiacetoxysilan, Trimethylacetoxysilan, Triethoxyacetoxysilan, Phenyldimethylacetoxysilan, Methyldibutoxyacetoxysilan, Dimethylmethoxyacetoxysilan, Vinyltriacetoxysilan, Propyltriacetoxysilan, Methylvinyldiacetoxysilan, Ethylvinyldiacetoxysilan, Octyltriacetoxysilan, Octylmethyldiacetoxysilan, und Systeme mit einem anderen Carbonsäurerest. Bevorzugt sind Methyltriacetoxysilan, Ethyltriacetoxysilan, Di-t-butoxydiacetoxysilan, Trimethylacetoxysilan. Sofern diese Silane lediglich eine Acyloxygruppe enthalten, können sie nur zusammen mit weiteren Acyloxysilanen mit wenigstens zwei Acyloxygruppen im Molekül verwendet werden.

Die erfindungsgemäßen Polysiloxan-Massen können im Stand der Technik gebräuchlichen Mischaggregaten hergestellt werden, wie z. B. in Planetenmischern, Dissolvern, Butterfly-Mischern oder kontinuierlich arbeitenden Mischschnecken. Bevorzugt erfolgt das Vermischen der Anteile bei Raumtemperatur.

Die Erfindung wird nachfolgend anhand von Beispielen erläutert.

Bestimmung des MEKO-Gehaltes (Methylethylketon, Zerfallsprodukt von Butanonoxim).

Alle folgenden Arbeiten werden unter Inertgasbedingungen (N2-Atmosphäre) durchgeführt: Es werden zunächst 20% des Inhaltes einer PE-Kartusche ausgespritzt und verworfen. Das dann folgende ausgespritzte Produkt wird zur analytischen Untersuchung wie folgt verwendet: 99 Gew.-Teile der Paste werden mit 1 Gew.-Teil trockenem Decalin (interner Standard) und mit 400 Gew.-Teilen trockenem Essigsäureisopropylester vermischt und 30min bei 10.000 U/min zentrifugiert. Die überstehende, klare Lösung wird gaschromatographisch analysiert und die flüchtigen Bestandteile erfaßt.

Die Kalibrierung der aus den Beispielen und Vergleichsbeispielen resultierenden MEKO-Gehalte erfolgte durch separate gaschromatographische Messungen verschiedener Decalin-/MEKO-Verhältnisse sowie insbesondere durch Messungen an Systemen mit definiertem MEKO- (Gew.-%) und Decalin-Gehalt (Gew.-%).

### Lagerstabilität

Die Lagerstabilität der Pasten wird durch eine Lagerung des unvernetzten Produktes
a) bei 100°C über 24h
b) bei 50°C über 1 Monat
getestet. Wenn das Produkt nach dieser Behandlung noch klebfrei aushärtet, ist eine Lagerstabilität von mindestens 6 Monaten bei Raumtemperatur gewährleistet.

### Beispiel 1

In einem Planetenmischer werden

| | | |
|---|---|---|
| I | 100 Gew.-Teile | eines endständige, Si-gebundene Hydroxy-gruppen enthaltenden Polydimethylsiloxans mit einer Viskosität von 50.000 mPa·s, |
| II | 31 Gew.-Teile | eines durch Trimethylsilyloxygruppen endblockierten Polydimethylsiloxans mit einer Viskosität von 1.000 mPa·s, |

vermischt und unter Rühren im Vakuum entgast. Anschließend werden

| | | |
|---|---|---|
| III | 0,3 Gew.-Teile | Dimethyldiacetoxysilan |

zudosiert und 10 min im Vakuum vermischt. Im nächsten Schritt werden

| | | |
|---|---|---|
| IV | 4,5 Gew.-Teile 3,0 Gew.-Teile | Methyltris(2-butanonoxim)silan, Vinyltriethoxysilan, |
| V | 1,2 Gew-Teile | 3-Aminopropyltriethoxysilan, |

zudosiert und weitere 10 min im Vakuum vermischt. Anschließend werden

| | | |
|---|---|---|
| VI | 12,2 Gew.-Teile | einer pyrogenen Kieselsäure mit einer BET-Oberfläche von 150 m²/g |

eingerührt und vollständig homogenisiert. Dann wird 15 min unter Vakuum gerührt und

| | | |
|---|---|---|
| VII | 0,12 Gew.-Teile | Di-n-butylzinndilaurat |

zudosiert und nochmals 10 min im Vakuum vermischt. Die Pasten werden unter Luftausschluß in PE-Kartuschen abgefüllt.

Der MEKO-Gehalt im unvernetzten Produkt beträgt 0,7 Gew.-%.

### Beispiel 2

Die in Beispiel 1 beschriebene Arbeitsweise wird wiederholt mit der Abänderung, daß

| | | |
|---|---|---|
| III | 0,3 Gew.-Teile | Dimethyldiacetoxysilan |
| IV | 1,0 Gew.-Teile | Tetrakis(2-butanonoxim)silan, |
| | 2,5 Gew.-Teile | Vinyltris(2-butanonoxim)silan, |
| | 4,0 Gew.-Teile | Vinyltrimethoxysilan |

eingesetzt werden.

Der MEKO-Gehalt im unvernetzten Produkt beträgt 0,6 Gew.-%.

### Beispiel 3

Die in Beispiel 1 beschriebene Arbeitsweise wird wiederholt mit der Abänderung, daß

| | | |
|---|---|---|
| III | 0,15 Gew.-Teile | Ethyltriacetoxysilan, |
| IV | 4,5 Gew.-Teile | Methyltris(2-butanonoxim)silan, |
| | 3,0 Gew.-Teile | Tetraethoxysilan |

eingesetzt werden.

Der MEKO-Gehalt im unvernetzten Produkt beträgt 0,7 Gew.-%.

### Beispiel 4

Die in Beispiel 1 beschriebene Arbeitsweise wird wiederholt mit der Abänderung, daß

| | | |
|---|---|---|
| III | 0,15 Gew.-Teile | Ethyltriacetoxysilan, |

| | | |
|---|---|---|
| IV | 3,0 Gew.-Teile | Vinyltris(2-butanonoxim)silan, |
| | 4,5 Gew.-Teile | Methyltrimethoxysilan |

eingesetzt werden.

Der MEKO-Gehalt im unvernetzten Produkt beträgt 0,6 Gew.-%.

### Beispiel 5

Die in Beispiel 1 beschriebene Arbeitsweise wird wiederholt mit der Abänderung, daß

| | | |
|---|---|---|
| III | 0,15 Gew.-Teile | Ethyltriacetoxysilan, |
| IV | 4,5 Gew.-Teile | Vinyltris(2-butanonoxim)silan, |
| | 3,0 Gew.-Teile | Methyltrimethoxysilan |

eingesetzt werden.

Der MEKO-Gehalt im unvernetzten Produkt beträgt 0,8 Gew.-%.

### Beispiel 6

Die in Beispiel 1 beschriebene Arbeitsweise wird wiederholt mit der Abänderung, daß

| | | |
|---|---|---|
| III | 0,15 Gew.-Teile | Methyltriacetoxysilan, |
| IV | 1,5 Gew.-Teile | Vinyltris(2-butanonoxim)silan, |
| | 6,0 Gew.-Teile | Dimethoxydi(2-butanonoxim)Silan |

eingesetzt werden.

Der MEKO-Gehalt im unvernetzten Produkt beträgt 0,8 Gew.-%.

### Beispiel 7

Die in Beispiel 1 beschriebene Arbeitsweise wird wiederholt mit der Abänderung, daß

| | | |
|---|---|---|
| III | 0,15 Gew.-Teile | Methyltriacetoxysilan, |
| IV | 1,5 Gew.-Teile | Vinyltris(2-butanonoxim)silan, |
| | 2,0 Gew.-Teile | Methytris(2-butanonoxim)silan, |
| | 3,5 Gew.-Teile | Tetraethoxysilan |

eingesetzt werden.

Der MEKO-Gehalt im unvernetzten Produkt beträgt 0,5 Gew.-%.

### Beispiel 8

Die in Beispiel 1 beschriebene Arbeitsweise wird wiederholt mit der Abänderung, daß

| | | |
|---|---|---|
| III | 0,15 Gew.-Teile | Methyltriacetoxysilan, |
| IV | 1,5 Gew.-Teile | Methyltris(2-butanonoxim)silan, |
| | 6,0 Gew.-Teile | Diethoxymono(2-butanonoxim)vinylsilan |

eingesetzt werden.

Der MEKO-Gehalt im unvernetzten Produkt beträgt 0,5 Gew.-%.

### Beispiel 9

Die in Beispiel 1 beschriebene Arbeitsweise wird wiederholt mit der Abänderung, daß

| | | |
|---|---|---|
| III | 0,3 Gew.-Teile | Di-tert-butoxydiacetoxysilan, |
| IV | 7,5 Gew.-Teile | Di(2-butanonoxim)ethoxyvinylsilan |

eingesetzt werden.

Der MEKO-Gehalt im unvernetzten Produkt beträgt 0,6 Gew.-%.

### Beispiel 10

Die in Beispiel 1 beschriebene Arbeitsweise wird wiederholt mit der Abänderung, daß

| | | |
|---|---|---|
| III | 0,3 Gew.-Teile | Di-tert-butoxydiacetoxysilan, |
| IV | 4,5 Gew.-Teile | Vinyltris(2-butanonoxim)silan |
| | 3,0 Gew.-Teile | Tetramethoxysilan |

eingesetzt werden.

Der MEKO-Gehalt im unvernetzten Produkt beträgt 0,7 Gew.-%.

### Beispiel 11

Die in Beispiel 1 beschriebene Arbeitsweise wird wiederholt mit der Abänderung, daß

| | | |
|---|---|---|
| III | 0,3 Gew.-Teile | Di-tert-butoxydiacetoxysilan, |
| IV | 1,5 Gew.-Teile | Vinyltris(2-butanonoxim)silan, |
| | 2,5 Gew.-Teile | Methyltris(2-butanonoxim)silan, |
| | 2,5 Gew.-Teile | Methyltrimethoxysilan |

eingesetzt werden.

Der MEKO-Gehalt im unvernetzten Produkt beträgt 0,5 Gew.-%.

### Beispiel 12

Die in Beispiel 1 beschriebene Arbeitsweise wird wiederholt mit der Abänderung, daß

| | | |
|---|---|---|
| III | 0,05 Gew.-Teile | Trimethylacetoxysilan |

| | | |
|---|---|---|
| | 0,10 Gew.-Teile | Methyltriacetoxysilan |
| IV | 3,0 Gew.-Teile | Tetrakis(2-butanonoxim)silan |
| | 4,5 Gew.-Teile | Methyltriethoxysilan |

eingesetzt werden.

Der MEKO-Gehalt im unvernetzten Produkt beträgt 0,7 Gew.-%.

### Beispiel 13

Die in Beispiel 1 beschriebene Arbeitsweise wird wiederholt mit der Abänderung, daß

| | | |
|---|---|---|
| III | 0,05 Gew.-Teile | Trimethylacetoxysilan |
| | 0,10 Gew.-Teile | Ethyltriacetoxysilan |
| IV | 6,0 Gew.-Teile | Tris(2-butanonoxim)Methoxysilan |
| | 1,5 Gew.-Teile | Vinyltrimethoxysilan |

eingesetzt werden.

Der MEKO-Gehalt im unvernetzten Produkt beträgt 0,6 Gew.-%.

### Beispiel 14

Die in Beispiel 1 beschriebene Arbeitsweise wird wiederholt mit der Abänderung, daß

| | | |
|---|---|---|
| III | 0,05 Gew.-Teile | Trimethylacetoxysilan |
| | 0,10 Gew.-Teile | Ethyltriacetoxysilan |
| IV | 5,0 Gew.-Teile | Tris(2-butanonoxim)Methoxysilan |
| | 2,5 Gew.-Teile | Vinyltrimethoxysilan |

eingesetzt werden.

Der MEKO-Gehalt im unvernetzten Produkt beträgt 0,4 Gew.-%.

Sämtliche nach den Beispielen 1 bis 14 hergestellten Polysiloxan-Massen härten sowohl nach einer Lagerung bei 100°C über 24 Stunden als auch eine Lagerung bei 50°C über einen Monat und anschließender Applikation noch problemlos zu einem klebfreien Elastomer aus. Die unvernetzten Massen sind sowohl kurz nach der Herstellung als auch nach ihrer Lagerung unter den obengenannten Bedingungen über einen Zeitraum von einem Monat standfest.

### Vergleichsbeispiel 1

Die in Beispiel 1 beschriebene Arbeitsweise wird wiederholt mit der Abänderung, daß

| | | |
|---|---|---|
| III | ein Silan der allgemeinen Formel Rₙ(R-O)ₘSi(O-Ac)ₖ nicht eingesetzt wird | |
| IV | 1,5 Gew.-Teile | Vinyltris(2-butanonoxim)silan |
| | 6,0 Gew.-Teile | Methyltris(2-butanonoxim)silan |

eingesetzt werden.

Der MEKO-Gehalt im unvernetzten Produkt beträgt 1,1 Gew.-%.

### Vergleichsbeispiel 2

Die in Beispiel 1 beschriebene Arbeitsweise wird wiederholt mit der Abänderung, daß

| | | |
|---|---|---|
| III | ein Silan der allgemeinen Formel Rn(R-O)mSi(O-Ac)k nicht eingesetzt wird | |
| IV | 7,5 Gew.-Teile | Vinyltris(2-butanonoxim)silan |

eingesetzt werden.

Der MEKO-Gehalt im unvernetzten Produkt beträgt 1,2 Gew.-%.

Die gemäß den Vergleichsbeispielen 1 und 2 hergestellten Polysiloxan-Massen weisen hinreichende Lagerfähigkeit und Standfestigkeit ebenso wie die erfindungsgemäßen Beispiele auf, jedoch liegt der MEKO-Gehalt als Indikator für den Butanonoxim-Gehalt über dem kennzeichnungspflichtigen Grenzwert.

### Vergleichsbeispiel 3

Die in Beispiel 1 beschriebene Arbeitsweise wird wiederholt mit der Abänderung, daß

| | | |
|---|---|---|
| III | ein Silan der allgemeinen Formel Rn(R-O)mSi(O-Ac)k nicht eingesetzt wird | |
| IV | 7,5 Gew.-Teile | Vinyl-Si(2-butanonoxim)1,5(Methoxy)1,5 |

eingesetzt werden.

Der MEKO-Gehalt im unvernetzten Produkt beträgt 0,7 Gew.-%.

### Vergleichsbeispiel 4

Die in Beispiel 1 beschriebene Arbeitsweise wird wiederholt mit der Abänderung, daß

| | | |
|---|---|---|
| III | ein Silan der allgemeinen Formel Rn(R-O)mSi(O-Ac)k nicht eingesetzt wird | |
| IV | 4,5 Gew.-Teile | Methyltris(2-butanonoxim)silan |
| | 3,0 Gew.-Teile | Vinyltrimethoxysilan |

eingesetzt werden.

Der MEKO-Gehalt im unvernetzten Produkt beträgt 0,7 Gew.-%.

Die Polysiloxan-Massen gemäß den Vergleichsbeispielen 3 und 4 härteten nicht mehr aus, nachdem sie 24 Stunden bei 100°C bzw. einen Monat bei 50°C gelagert worden waren. Sie blieben nach dieser Lagerung pastös. Das unvernetzte Produkt ist nicht standfest, sondern zerfließt sowohl kurz nach der Herstellung als auch nach der Lagerung unter den angegebenen Bedingungen.

Diese Vergleichsbeispiele belegen, daß sich ohne die erfindungsgemäßen vernetzungsfähigen Acyloxypolysiloxane keine hinreichend lagerstabilen und standfesten Polysiloxan-Massen herstellen lassen, deren MEKO-Gehalt bzw. Butanonoxim-Gehalt unter dem Grenzwert von 1 Gew.-% bleibt.

## Patentansprüche

1. Bei Raumtemperatur aushärtbare Polysiloxan-Masse, die enthält:
a) vernetzungsfähige Polysiloxane, die Acyloxygruppen als funktionelle Gruppen enthalten;
b) Alkoxysilanvernetzer.

2. Polysiloxan-Masse nach Anspruch 1, **dadurch gekennzeichnet, daß** die Polysiloxane Hydroxygruppen und Acyloxygruppen als funktionelle Gruppen enthalten.

3. Polysiloxan-Masse nach Anspruch 2, **dadurch gekennzeichnet, daß** sie eine Mischung aus Alkoxy- und Oximsilanen und/oder Silane mit Alkoxy- und Oximgruppen im selben Molekül als Vernetzer enthält.

4. Polysiloxan-Masse nach Anspruch 3, **dadurch gekennzeichnet, daß** das Molverhältnis zwischen Alkoxy- und Oximgruppen zwischen 1:4 und 4:1, vorzugsweise 1:2 und 2:1 liegt.

5. Polysiloxan-Masse nach einem der Ansprüche 1 bis 4, **dadurch gekennzeichnet, daß** die Acyloxygruppen die Formel - O-C=O-R aufweisen, wobei R gleich H oder ein Kohlenwasserstoffrest mit 1 - 8 C-Atomen ist.

6. Polysiloxan-Masse nach Anspruch 5, **dadurch gekennzeichnet, daß** die Acyloxygruppen ganz oder teilweise Acetoxygruppen sind.

7. Polysiloxan-Masse nach einem der Ansprüche 1 bis 6, **dadurch gekennzeichnet, daß** sie Polydiacyloxysiloxane enthält.

8. Polysiloxan-Masse nach einem der Ansprüche 1 bis 7, **dadurch gekennzeichnet, daß** die Alkoxysilanvernetzer zwei oder mehr Alkoxygruppen enthalten.

9. Verfahren zur Herstellung einer Polysiloxan-Masse nach Anspruch 1, **dadurch gekennzeichnet, daß** man reaktive Hydroxygruppen enthaltende Polysiloxane mit Acyloxygruppen enthaltenden Silanen reagieren lässt und anschließend oder gleichzeitig Alkoxysilanvernetzer zusetzt.

10. Verfahren nach Anspruch 9, **dadurch gekennzeichnet, daß** die reaktive Hydroxygruppen enthaltenden Polysiloxane Polydiorganosiloxane, vorzugsweise Polydimethylsiloxane sind.

11. Verfahren nach Anspruch 9 oder 10, **dadurch gekennzeichnet, daß** die Acyloxygruppen enthaltenden Silane ausgewählt sind aus der Gruppe bestehend aus:
a) Silanen der allgemeinen Formel:
Rₙ(R-O)ₘSi(O-Ac)ₖ
wobei Ac einen Acylrest und R Wasserstoff oder einen ggf. substituierten Kohlenwasserstoffrest mit 1-8 C-Atomen darstellt, wobei R gleich oder verschieden sein können und wobei für die Subskripte gilt:
k: 1 bis 4
m: 0 bis 2
n: 0 bis 2
k+m+n=4
b) Mischungen aus Silanen gemäß a) mit Silanen, die wie in a) definiert sind, bei denen jedoch für die Subskripte gilt:
k: 0 bis 4
m: 0 bis 4
n: 0 bis 4
k+m+n=4
c) teilhydrolysierte Kondensate von Silanen gemäß a) oder Mischungen gemäß b).

12. Verfahren nach einem der Ansprüche 9 bis 11, **dadurch gekennzeichnet, daß** der Anteil der Acyloxygruppen enthaltenden Silane bezogen auf die reaktive Hydroxygruppen enthaltenden Polysiloxane 0,01 - 2 Gew.-%, vorzugsweise 0,05 -1,5 Gew.-%, weiter vorzugsweise 0,1 - 0,5 Gew.-% beträgt.

## Claims

1. Room temperature vulcanizing polysiloxane composition which comprises:
a)crosslinkable polysiloxanes which contain acyloxy groups as functional groups;
b)alkoxysilane crosslinkers.

2. Polysiloxane composition according to Claim 1, **characterized in that** the polysiloxanes contain hydroxy groups and acyloxy groups as functional groups.

3. Polysiloxane composition according to Claim 2, **characterized in that** it contains a mixture of alkoxysilanes and oximosilanes and/or silanes having alkoxy and oxime groups in the same molecule as crosslinker.

4. Polysiloxane composition according to Claim 3, **characterized in that** the molar ratio of alkoxy groups to oxime groups is from 1:4 to 4:1, preferably from 1:2 to 2:1.

5. Polysiloxane composition according to any of Claims 1 to 4, **characterized in that** the acyloxy groups have the formula - O-C=O-R, where R is H or a hydrocarbon radical having 1-8 carbon atoms.

6. Polysiloxane composition according to Claim 5, **characterized in that** all or part of the acyloxy groups are acetoxy groups.

7. Polysiloxane composition according to any of Claims 1 to 6, **characterized in that** it contains polydiacyloxysiloxanes.

8. Polysiloxane composition according to any of Claims 1 to 7, **characterized in that** the alkoxysilane crosslinkers contain two or more alkoxy groups.

9. Process for preparing a polysiloxane composition according to Claim 1, **characterized in that** polysiloxanes containing reactive hydroxy groups are allowed to react with silanes containing acyloxy groups and alkoxysilane crosslinkers are added subsequently or simultaneously.

10. Process according to Claim 9, **characterized in that** the polysiloxanes containing reactive hydroxy groups are polydiorganosiloxanes, preferably polydimethylsiloxanes.

11. Process according to Claim 9 or 10, **characterized in that** the silanes containing acyloxy groups are selected from the group consisting of:
a) silanes of the general formula:
Rₙ(R-O)ₘSi(O-Ac)ₖ
where Ac is an acyl radical and R is hydrogen or a substituted or unsubstituted hydrocarbon radical having 1-8 carbon atoms, with R being able to be identical or different, and the subscripts are as follows:
k: 1 to 4
m: 0 to 2
n: 0 to 2
k+m+n=4
b)mixtures of silanes as set forth in a) with silanes which are as defined in a) but the subscripts are as follows:
k: 0 to 4
m:0 to 4
n:0 to 4
k+m+n=4
c) partially hydrolysed condensates of silanes as set forth in a) or mixtures as set forth in b).

12. Process according to any of Claims 9 to 11, **characterized in that** the proportion of silanes containing acyloxy groups based on the polysiloxanes containing reactive hydroxy groups is 0.01-2% by weight, preferably 0.05-1.5% by weight, more preferably 0.1-0.5% by weight.

## Revendications

1. Masse de polysiloxane durcissable à la température ambiante, qui contient :
a) des polysiloxanes réticulables, qui contiennent comme groupes fonctionnels des groupes acyloxyles ;
b) des réticulants d'alcoxysilane.

2. Masse de polysiloxane selon la revendication 1, **caractérisée en ce que** les polysiloxanes contiennent comme groupes fonctionnels des groupes hydroxyles et des groupes acyloxyles.

3. Masse de polysiloxane selon la revendication 2, **caractérisée en ce qu'**elle contient comme réticulant un mélange d'alcoxy- et d'oximesilanes et/ou des silanes avec des groupes alcoxyles et oximes dans la même molécule.

4. Masse de polysiloxane selon la revendication 3, **caractérisée en ce que** le rapport molaire entre les groupes alcoxyles et les groupes oximes est compris entre 1 : 4 et 4 : 1, de préférence entre 1 : 2 et 2 : 1.

5. Masse de polysiloxane selon l'une quelconque des revendications 1 à 4, **caractérisée en ce que** les groupes acyloxyles présentent la formule - O-C=O-R, dans laquelle R est égal à H ou à un radical hydrocarbure à 1 à 8 atomes de C.

6. Masse de polysiloxane selon la revendication 5, **caractérisée en ce que** les groupes acyloxyles sont complètement ou partiellement des groupes acétoxyles.

7. Masse de polysiloxane selon l'une quelconque des revendications 1 à 6, **caractérisée en ce qu'**elle contient des polydiacyloxysiloxanes.

8. Masse de polysiloxane selon l'une quelconque des revendications 1 à 7, **caractérisée en ce que** les réticulants d'alcoxysilane contiennent deux ou plus groupes alcoxyles.

9. Procédé de production d'une masse de polysiloxane selon la revendication 1, **caractérisée en ce qu'**on fait réagir des polysiloxanes contenant des groupes hydroxyles réactifs avec des silanes contenant des groupes acyloxyles et **en ce qu'**on ajoute ensuite ou en même temps des réticulants d'alcoxysilane.

10. Procédé selon la revendication 9, **caractérisé en ce que** les polysiloxanes contenant les groupes hydroxyles réactifs sont des polydiorganosiloxanes, de préférence des polydiméthylsiloxanes.

11. Procédé selon la revendication 9 ou 10, **caractérisé en ce que** les silanes contenant des groupes acyloxyles sont choisis parmi le groupe qui consiste en :
a) des silanes de la formule générale :
Ra(R-O)ₘSi(O-Ac)ₖ
dans laquelle Ac représente un radical acyle et R un hydrogène ou un radical hydrocarbure avec 1 à 8 atomes de carbone, substitué le cas échéant, sachant que les R peuvent être identiques ou différents et sachant que l'on a pour les indices :
k: 1 à4
m:0 à 2
n:0 à 2
k+m+n=4
b) des mélanges de silanes selon a) avec des silanes qui sont définis comme dans a), mais pour lesquels les indices sont :
k: 0 à 4
m:0 à 4
n:0à4
k+m+n=4
c) des produits de condensation partiellement hydrolysés de silanes selon a) ou de mélanges selon b).

12. Procédé selon l'une quelconque des revendications 9 à 11, **caractérisé en ce que** la proportion des silanes contenant des groupes acyloxyles, rapportée aux polysiloxanes contenant des groupes hydroxyles réactifs est de 0,01 à 2 % en poids, de préférence de 0,05 à 1,5 % en poids, encore plus préférablement de 0,1 à 0,5 % en poids.
